(19) Europäisches Patentamt
European Patent Office
Office européen des brevets

(11) **EP 3 093 065 A1**

(12) **EUROPEAN PATENT APPLICATION**
published in accordance with Art. 153(4) EPC

(43) Date of publication:
**16.11.2016 Bulletin 2016/46**

(51) Int Cl.:
**B01D 71/36** (2006.01)   **B01D 39/16** (2006.01)
**B01D 69/10** (2006.01)   **C08J 9/00** (2006.01)

(21) Application number: **15735234.5**

(22) Date of filing: **06.01.2015**

(86) International application number:
**PCT/JP2015/000019**

(87) International publication number:
**WO 2015/105040 (16.07.2015 Gazette 2015/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.01.2014 JP 2014003597**

(71) Applicant: **Nitto Denko Corporation**
**Ibaraki-shi, Osaka 567-8680 (JP)**

(72) Inventors:
• **UCHIYAMA, Shiho**
**Ibaraki-shi**
**Osaka 567-8680 (JP)**
• **AIZAWA, Seiji**
**Ibaraki-shi**
**Osaka 567-8680 (JP)**

(74) Representative: **Hart-Davis, Jason et al**
**Cabinet Beau de Loménie**
**158, rue de l'Université**
**75340 Paris Cedex 07 (FR)**

(54) **PRODUCTION METHOD FOR POLYTETRAFLUOROETHYLENE POROUS FILM, PRODUCTION METHOD FOR WATERPROOF AIR-PERMEABLE MEMBER, AND PRODUCTION METHOD FOR AIR FILTER FILTERING MEDIUM**

(57) Provided is a method including: a step A of extruding a mixture containing a fine PTFE powder and a liquid lubricant into a sheet form so as to obtain a PTFE sheet; a step B of rolling the PTFE sheet by passing the sheet between a pair of rolls in the longitudinal direction of the sheet; a step C of heating the rolled PTFE sheet to a temperature of 19°C or higher; a step D of stretching the rolled PTFE sheet having a temperature of 19°C or higher in the width direction of the sheet; a step E of removing the liquid lubricant from the PTFE sheet; and a step F of stretching the PTFE sheet, from which the liquid lubricant has been removed, in both the longitudinal direction and the width direction so as to form pores in the sheet.

FIG.3

EP 3 093 065 A1

**Description**

TECHNICAL FIELD

The present invention relates to a method for producing a porous polytetrafluoroethylene (PTFE) membrane, a method for producing a waterproof gas-permeable member using the porous PTFE membrane, and a method for producing an air filter medium using the porous PTFE membrane as a collection layer.

BACKGROUND ART

Porous PTFE membranes are generally produced as follows: a mixture obtained by mixing a fine PTFE powder and a liquid lubricant serving as an extrusion aid is extrusion-molded; the resulting molded mixture is rolled into a sheet form; the liquid lubricant is removed from the PTFE sheet obtained by the rolling; and the PTFE sheet, from which the liquid lubricant has been removed, is stretched to form pores in the sheet.

A type of electronic device or lighting device has a housing provided with an opening portion. In the electronic device, the opening portion allows acoustic energy to propagate between an acoustic transducer such as a microphone or speaker placed inside the housing and the outside of the housing. In the lighting device, the opening portion allows air expanded by heat from a light emitter to be discharged outside the housing. Small-sized electronic devices typified by mobile phones, and vehicle lighting devices typified by headlamps of automobiles, may be required to have high waterproofness and thus need to prevent water entry through the opening portion. For this reason, the opening portion of the housing of such a device is often covered by a waterproof gas-permeable member having both water resistance and gas permeability.

Porous PTFE membranes for use in waterproof gas-permeable members are evaluated for their performance in terms of water resistance and gas permeability. These two properties are in a so-called trade-off relationship. Attempts to provide a waterproof gas-permeable member excellent in both water resistance and gas permeability have been proposed.

Patent Literature 1 discloses a method for producing a porous PTFE membrane, the method including the steps of extruding a mixture containing a fine PTFE powder having a standard specific gravity of 2.19 or less and a liquid lubricant into a sheet form using a flat die so as to obtain a PTFE sheet; rolling the PTFE sheet by passing the sheet between a pair of rolls in a longitudinal direction of the sheet; stretching the rolled PTFE sheet in its width direction; removing the liquid lubricant from the PTFE sheet; stretching the PTFE sheet, from which the liquid lubricant has been removed, in both the longitudinal direction and the width direction to form pores in the sheet. This production method is capable of yielding a porous PTFE membrane having both improved water resistance and improved gas permeability.

CITATION LIST

Patent Literature

Patent Literature 1: JP 2013-253214 A

SUMMARY OF INVENTION

Technical Problem

In the production method disclosed in Patent Literature 1, however, a porous PTFE membrane resulting from the widthwise stretching of the PTFE sheet from which the liquid lubricant has been removed may have a thickness which varies in the width direction of the porous PTFE membrane. An increase in such unevenness of stretching could cause a local decrease in water resistance or gas permeability of the porous PTFE membrane.

In view of these circumstances, the present invention aims to provide a method for producing a porous PTFE membrane, the method being adapted to reduce the unevenness of stretching of a porous PTFE membrane. The present invention also aims to provide a method for producing a waterproof gas-permeable member and a method for producing an air filter medium, the waterproof gas-permeable member and the air filter medium each including a porous PTFE membrane with reduced unevenness of stretching.

Solution to Problem

A study by the present inventors has revealed that the reduction in unevenness of stretching can be achieved when the temperature of the PTFE sheet from which the liquid lubricant has been removed is adjusted to 19°C or higher before stretching of the PTFE sheet.

The present invention provides a method for producing a porous PTFE membrane, including:

a step A of extruding a mixture containing a fine PTFE powder and a liquid lubricant into a sheet form so as to obtain a PTFE sheet;

a step B of rolling the PTFE sheet by passing the PTFE sheet between a pair of rolls in a longitudinal direction of the sheet corresponding to a direction of the extrusion in the step A;

a step C of heating the PTFE sheet having a temperature lower than 19°C to a temperature of 19°C or higher;

a step D of stretching the rolled PTFE sheet having a temperature of 19°C or higher in a width direction perpendicular to the longitudinal direction of the sheet;

a step E of removing the liquid lubricant from the PTFE sheet stretched in the step D; and

a step F of stretching the PTFE sheet, from which the liquid lubricant has been removed in the step E, in both the longitudinal direction and the width direction of the sheet, so as to obtain a porous PTFE membrane.

In another aspect, the present invention provides a method for producing a waterproof gas-permeable member, including a step of joining a fixing member to a joint region of a porous PTFE membrane having a gas permeation region surrounded by the joint region, the method further including performing the method for producing a porous PTFE membrane according to the present invention as a step of preparing the porous PTFE membrane.

In still another aspect, the present invention provides a method for producing an air filter medium, including a step of joining a porous PTFE membrane and a gas-permeable support member together, the method further including performing the method for producing a porous PTFE membrane according to the present invention as a step of preparing the porous PTFE membrane.

Advantageous Effects of Invention

The present invention allows a reduction in unevenness of stretching of porous PTFE membranes. The present invention allows stable mass-production of porous PTFE membranes having improved water resistance and improved gas permeability.

BRIEF DESCRIPTION OF DRAWINGS

FIG. 1A is a cross-sectional view showing an embodiment of the waterproof gas-permeable member produced according to the present invention.

FIG. 1B is a back view showing the embodiment of the waterproof gas-permeable member produced according to the present invention.

FIG. 2 is a cross-sectional view showing another embodiment of the waterproof gas-permeable member produced according to the present invention.

FIG. 3 shows graphs representing thicknesses at different points in the width direction for a porous PTFE membrane produced according to the present invention and conventional porous PTFE membranes, the thicknesses being measured for each porous PTFE membrane after a PTFE sheet from which a liquid lubricant was removed was stretched in the width direction.

FIG. 4 is a perspective view showing an exemplary air filter unit.

DESCRIPTION OF EMBODIMENTS

Embodiments of the present invention will hereinafter be described.

In the method for producing a porous PTFE membrane according to the present embodiment, a mixture containing a fine PTFE powder and a liquid lubricant is extruded into a sheet form using a flat die (T-die) (step A).

Next, the PTFE sheet extruded from the die is rolled by passing it between a pair of rolls in its longitudinal direction (machine direction or MD, which is the same as the direction of the extrusion in the step A) (step B).

It is preferable that the step B be performed with the PTFE sheet maintaining its dimension in the width direction. In this case, the PTFE sheet is extended only in its longitudinal direction. To be specific, the rolling can be accomplished by passing the PTFE sheet between a pair of pressure rolls while pulling the PTFE sheet by means of a pull roll placed downstream of the pair of pressure rolls in the traveling direction of the sheet. With the rotational speed of the pull roll being set somewhat higher than the rotational speed of the pressure rolls during this rolling, the PTFE sheet is rolled in the longitudinal direction while keeping its dimension constant in the width direction. The temperature of the rolled PTFE sheet, which is influenced by the temperatures of the rolls and the ambient atmosphere, may be lower than 19°C corresponding to the phase transition point of PTFE. Such a low temperature of the PTFE sheet leads to a great thickness variation of the resulting porous PTFE membrane in its width direction.

Thus, the PTFE sheet having a temperature lower than 19°C is heated to a temperature of 19°C or higher (step C). That is, in the step C, the PTFE sheet having a temperature lower than the phase transition point of PTFE is heated to a temperature equal to or higher than the phase transition point of PTFE. The heating of the PTFE sheet is preferably performed so that the temperature of the heated sheet is lower than the boiling point of the liquid lubricant used and is, for example, lower than 200°C. The step C is preferably performed immediately prior to step D. The step C may be performed at any time after the step A, insofar as the temperature of the PTFE sheet to be stretched in the step D is 19°C or higher. For example, the step C may be performed prior to the step B.

Subsequently, the PTFE sheet having a temperature of 19°C or higher is stretched in its width direction (step D). The inclusion of this stretching allows the PTFE sheet containing the liquid lubricant to be extended first in the longitudinal direction and then in the width direction. In the step D, the maintenance of the temperature of the PTFE sheet at 19°C or higher is required only until the start of the stretching.

The subsequent steps E and F are performed generally in conventional manners. To be specific, first, the PTFE sheet is heated to remove the liquid lubricant (step E). Subsequently, the PTFE sheet is stretched in its longitudinal direction and width direction to produce a porous PTFE membrane (step F). The step F is preferably performed at a temperature lower than the melting point of PTFE. The porous PTFE membrane may then be sintered by heating it to a temperature equal to or higher than the melting point of PTFE (step G).

In the step F, appropriate adjustment of the stretch ratios is made to obtain desired properties, as is conventionally done. An area stretch ratio, calculated by multiplying the stretch ratio in the longitudinal direction by the stretch ratio in the width direction, is adjusted as appropriate according to the intended use of the porous PTFE membrane. When the porous PTFE membrane is provided for use in a waterproof gas-permeable member, the appropriate area stretch ratio is, for example, 4 or more and less than 500. In order to achieve a good balance between the gas permeability and the water resistance, the area stretch ratio is preferably 16 or more and 140 or less and particularly preferably 30 or more and 140 or less. In some cases, the area stretch ratio is preferably 50 or more and 140 or less. For a situation that does not require high gas permeability, the area stretch ratio may be 16 or more and less than 30. When the porous PTFE membrane is provided for use as a collection layer in an air filter medium, the appropriate area stretch ratio is 150 or more and 700 or less.

A raw material preferably used is a fine PTFE powder having a standard specific gravity of 2.19 or less, particularly 2.16 or less. The standard specific gravity may be referred to as "SSG", and is a specific gravity determined by a measurement method specified in Japanese Industrial Standards (JIS) K 6892. The specific gravity is known to have a negative correlation with the average molecular weight (this means that the smaller the standard specific gravity, the larger the average molecular weight). For example, Fluon CD-123, manufactured by Asahi Glass Fluoropolymers Co., Ltd., has a standard specific gravity of 2.155 and an average molecular weight of 12,000,000, Fluon CD-145, manufactured by the same company, has a standard specific gravity of 2.165 and an average molecular weight of 8,000,000, and Fluon CD-1, manufactured by the same company, has a standard specific gravity of 2.20 and an average molecular weight of 2,000,000.

Hereinafter, the steps constituting the production method of the present invention will be described in more detail.

The mixing ratio between the fine PTFE powder and the liquid lubricant in the step A is adjusted, for example, so that 5 to 50 parts by mass, particularly preferably 5 to 30 parts by mass, of the liquid lubricant is contained per 100 parts by mass of the fine PTFE powder. As the liquid lubricant there may be used a conventionally-used hydrocarbon oil such as liquid paraffin or naphtha. The present invention does not require that the liquid lubricant be contained in a large amount.

The step A uses a flat die for the extrusion of the mixture containing the fine PTFE powder. Examples of the flat die (T-die) include a straight manifold-type T-die, a coat hanger-type T-die, and a fishtail-type T-die. The extrusion molding in the step A is not extrusion molding of a molten material, but rather extrusion molding of a paste mixed with an aid. Thus, the mixture to be extruded has a high viscosity. This is why the fishtail-type T-die (fishtail die) is suitable for use among the dies mentioned above.

The appropriate thickness of the PTFE sheet formed by extrusion in the step A is 0.5 to 5.0 mm and particularly 1.2 to 2.0 mm.

In the step B, the PTFE sheet containing the liquid lubricant is rolled to become thinner than the as-extruded sheet and have a uniform thickness. This rolling may be performed, for example, as a process which causes no change in the dimension of the PTFE sheet in its width direction. In this case, the rolling in the step B is a process of extending the PTFE sheet only in its longitudinal direction.

To be specific, the rolling in the step B is preferably performed by passing the PTFE sheet between a pair of pressure rolls while pulling the PTFE sheet by means of a pull roll placed downstream of the pair of pressure rolls in the traveling direction of the sheet. With the rotational speed of the pull roll being set somewhat higher than the rotational speed of the pressure rolls during this rolling, the PTFE sheet is stretched in the longitudinal direction while keeping its dimension constant in the width direction.

The rolling of the PTFE sheet in the step B is preferably performed so that the dimension in the width direction of the rolled PTFE sheet is 90 to 110% and preferably 95 to 105% of the dimension in the width direction of the PTFE sheet that has yet to be rolled. In the present description, it is determined that the rolling is accomplished "with the PTFE sheet maintaining a dimension in the width direction" when the change in the dimension in the width direction falls within the range as specified above.

In the step B, the thickness of the rolled PTFE sheet is preferably 50 to 2000 $\mu$m and particularly preferably 100 to 900 $\mu$m. In the step B, the thickness of the rolled PTFE sheet is preferably 70% or less and, for example, 5 to 60% of the thickness of the sheet that has yet to be rolled. The thickness of the rolled PTFE sheet in the step B may be 30% or less and, for example, 10 to 15% of the thickness of the sheet that has yet to be rolled.

The rolling in the step B must be performed on the PTFE sheet retaining the liquid lubricant. Thus, the temperature of the PTFE sheet is kept lower than the boiling point of the liquid lubricant (200°C) while the rolling is performed. Heat of vaporization of the liquid lubricant may decrease the temperature of the PTFE sheet below the ambient temperature. It is not uncommon that the temperature of the rolled PTFE sheet having an increased surface area becomes less than 19°C, although the occurrence of such a situation depends on the temperatures of the rolls used and the ambient temperature.

In the step C, the rolled PTFE sheet is heated to 19°C or higher, preferably to 25°C or higher, and more preferably to 30°C or higher. The heating is preferably performed so that the temperature of the heated PTFE sheet is less than 200°C, preferably less than 150°C, and more preferably less than 100°C. The technique for heating the PTFE sheet is not limited. The PTFE sheet may be heated with a heater such as an infrared heater or may be heated in a thermostatic bath or a treatment chamber held at a given temperature.

In the step D, the PTFE sheet containing the liquid lubricant is stretched in its width direction. This stretching is advantageously performed by means of a tenter often used conventionally in widthwise stretching. The stretch ratio appropriate for the step D is 1.2 to 10, particularly 2.0 to 8.0, and, in some cases, 5.0 to 8.0. Too low a stretch ratio makes it difficult to sufficiently alter the membrane structure. Too high a stretch ratio may lead to decrease in strength in the longitudinal direction or to non-uniformity of the membrane thickness.

The step D must also be performed on the PTFE sheet retaining the liquid lubricant. Thus, the temperature of the PTFE sheet is kept lower than the boiling point of the liquid lubricant (200°C) while the step D is performed. For example, it is preferable to keep the temperature of the PTFE sheet at 100°C or lower, preferably at 60°C or lower, and, in some cases, at 40°C or lower while the step D is performed.

In the step E, the liquid lubricant is removed from the PTFE sheet stretched in the width direction. Advantageously, this step is accomplished, as is conventionally done, by drying the PTFE sheet, particularly by maintaining the PTFE sheet containing the liquid lubricant at a temperature suitable for removal of the liquid lubricant. The temperature suitable for the drying is about 100 to 300°C.

In the step F, the PTFE sheet, from which the liquid lubricant has been removed, is subjected sequentially to stretching in its longitudinal direction and stretching in its width direction so as to form pores in the sheet. Advantageously, the stretching in the longitudinal direction and the stretching in the width direction are accomplished, as conventionally done, by roll stretching which makes use of the difference in rotational speed between rolls and by tenter stretching which uses a tenter, respectively. It does not matter which of the stretching in the longitudinal direction and the stretching in the width direction is performed first.

The stretch ratios in the step F have a significant influence on the structure and properties of the resulting porous PTFE membrane. The stretch ratios in the step F may be appropriately set according to the desired properties of the membrane.

The appropriate stretch ratios vary depending on the conditions of the rolling and stretching performed in the steps prior to the step E, and the preferred ranges of the stretch ratios are difficult to unambiguously specify In general, when the porous PTFE membrane is provided for use in a waterproof gas-permeable member, the stretch ratio in the longitudinal direction is preferably 2 to 50 and particularly preferably 4 to 20, and the stretch ratio in the width direction is preferably 3 to 70 and particularly preferably 4 to 30. In general, when the porous PTFE membrane is provided for use as a collection layer in an air filter medium, the stretch ratio in the longitudinal direction is preferably 5 to 30 and particularly preferably 10 to 20, and the stretch ratio in the width direction is preferably 10 to 40 and particularly preferably 20 to 30. The preferred range of an area stretch ratio, which is a value determined by multiplying the stretch ratio for the stretching in the longitudinal direction (longitudinal stretching) by the stretch ratio for the stretching in the width direction (transverse stretching), is as exemplified above. When the porous PTFE membrane is provided for use as a collection layer in an air filter medium, the area stretch ratio is preferably 250 or more and particularly preferably 300 or more in terms of reduction in pressure loss, and the area stretch ratio is preferably 700 or less and particularly preferably 600 or less in terms of prevention of significant drop in collection efficiency. The preferred area stretch ratio for the porous PTFE membrane for use in an air filter medium is 300 or more and 700 or less.

The stretching in the step F is preferably performed at a temperature lower than the melting point of PTFE (327°C). The temperature is, for example, 60 to 300°C and particularly 110 to 150°C. The stretching in the step F facilitates the formation of slimmer fibrils.

In the step G, the porous PTFE membrane is heated to a temperature equal to or higher than the melting point of PTFE. This heating step is commonly called "sintering", and provides an increase in strength of the porous PTFE sheet. The temperature appropriate for the sintering is 327 to 460°C.

The thickness of the porous PTFE membrane produced according to the present invention is not particularly limited. The thickness is preferably 1 $\mu$m to 300 $\mu$m and more preferably 2 $\mu$m to 50 $\mu$m. In particular, when the porous PTFE membrane is provided for use as a collection layer in an air filter, the thickness of the membrane is preferably 5 to 15 $\mu$m and more preferably 7 to 13 $\mu$m and may be, for example, 8 to 12 $\mu$m.

The porous PTFE membrane produced according to the present invention can have properties suitable for use as a waterproof gas-permeable membrane. Hereinafter, an embodiment of the waterproof gas-permeable member produced according to the present invention will be described with reference to the drawings.

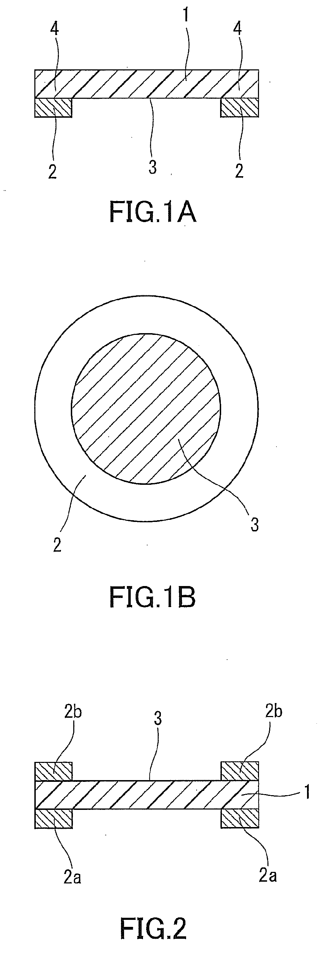

The waterproof gas-permeable member shown in FIGS. 1A and 1B includes a porous PTFE membrane 1 and a fixing member 2 for fixing the porous PTFE membrane 1 to a housing which requires ventilation. The fixing member 2 is joined to the porous PTFE membrane 1 in a joint region 4 surrounding a gas permeation region 3 of the porous PTFE membrane 1. The surface of the fixing member 2 opposite to that joined to the porous PTFE membrane 1 is joined to the surface of the housing so as to surround an opening portion provided in the housing, and thus the porous PTFE membrane 1 is fixed to the housing. In this state, the ventilation of the housing is accomplished by passage of air through the opening portion of the housing and through the gas permeation region 3 of the membrane 1, and entry of water into the housing is prevented by virtue of the water resistance of the porous PTFE membrane 1.

The fixing member 2 shown in FIGS. 1A and 1B is ring-shaped. The shape of the fixing member 2 is not limited to such a ring shape. The fixing member 2 shown in FIGS. 1A and 1B is a double-faced tape. The fixing member 2 is not limited to a tape. A resin member formed to be fittable to the opening of the housing may be used as the fixing member 2.

The waterproof gas-permeable member shown in FIG. 2 includes the porous PTFE membrane 1 and a plurality of fixing members 2a and 2b. Similar to the fixing member 2 (see FIGS. 1A and 1B), the fixing members 2a and 2b are ring-shaped as viewed in a direction perpendicular to the plane of the membrane, and surround the gas permeation region 3 on both principal surfaces of the porous PTFE membrane 1. This waterproof gas-permeable member is suitable for use, for example, inside a housing of an electronic device. In this case, for example, the fixing member 2a is joined to a device (e.g., a speaker) placed inside the housing, while the fixing member 2b is joined to the inner surface of the housing so as to surround the opening portion of the housing.

The porous PTFE membrane produced according to the present invention can have properties suitable for use as a collection layer of an air filter. The present invention also makes it possible to provide a porous PTFE membrane with an increased PF value while preventing a significant decrease in the average diameter of fibrils (average fiber diameter). That is, the present invention can provide a porous PTFE membrane having an increased PF value of 36 or more, even 37 or more, particularly 38 or more, or, in some cases, 40 or more while having an average fiber diameter of 55 nm or more, even 57 nm or more, particularly 58 nm or more, or, in some cases, 60 nm or more or having an average fiber diameter of, for example, 55 to 83 nm or particularly 55 to 80 nm. A porous PTFE membrane having a greater average fiber diameter is more advantageous in obtaining high strength.

The PF value is a value determined by the following equation.

$$\text{PF value} = \{-\log(\text{PT}(\%)/100)/(\text{PL}(\text{Pa})/9.8)\} \times 100$$

PT in the equation represents a permeability, which is determined as follows: PT(%) = 100 - CE(%). CE represents a collection efficiency, which is determined as a value of collection efficiency measured at a permeate flow rate of 5.3 cm/second using dioctyl phthalate having a particle diameter of 0.10 to 0.20 $\mu$m. PL represents a pressure loss, which is determined as a value of pressure loss measured at a permeate flow rate of 5.3 cm/second.

The present invention can also provide a porous PTFE membrane having a collection efficiency of 99.999% (5N, as expressed by the number of consecutive 9s) or more, even 99.9999% (6N) or more, particularly 99.99999% (7N) or more, more particularly 99.999999% (8N) or more. The porous PTFE membrane of the present invention can show a pressure loss of, for example, 220 Pa or less or, in some cases, 200 Pa or less while exerting such a high collection efficiency as specified above.

In the case of using the resulting porous PTFE membrane in an air filter medium, the porous PTFE membrane is desirably laminated to a gas-permeable support member. This lamination may be accomplished by joining the porous PTFE membrane and the gas-permeable support member together according to a conventionally-used method.

Fibers constituting the gas-permeable support member are preferably formed of a thermoplastic resin, specific examples of which include polyolefins (such as polyethylene (PE) and polypropylene (PP)), polyesters (such as polyethylene terephthalate (PET)), polyamides, and composites thereof.

A woven fabric, a non-woven fabric, or a felt, can be used as the gas-permeable support member. A non-woven fabric is often used. A typical non-woven fabric known as a preferred gas-permeable support member is formed of composite fibers having a core-sheath structure, in which the core component (e.g., PET) has a higher melting point than the sheath component (e.g., PE). Such a non-woven fabric is suitable for heat lamination in which the sheath component is melted and joined to the porous PTFE membrane.

The lamination of the porous PTFE membrane to a gas-permeable support member can be accomplished not only by the above heat lamination but also by adhesive lamination. For adhesive lamination, for example, the use of a hot-melt adhesive is suitable.

The layered structure including the porous PTFE membrane and a gas-permeable support member is not particularly limited, and is preferably one in which at least one gas-permeable support member is placed on each side of the porous PTFE membrane (typically a three-layer structure consisting of a gas-permeable support member, the porous PTFE membrane, and a gas-permeable support member which are arranged in this order). Where necessary, a structure including two layers of the porous PTFE membrane (e.g., a five-layer structure consisting of a gas-permeable support member, the porous PTFE membrane, a gas-permeable support member, the porous PTFE membrane, and a gas-permeable support member which are arranged in this order) may be employed. Depending on the intended use, a structure including a gas-permeable support member formed of slender fibers as a pre-filter (e.g., a four-layer structure consisting of a gas-permeable support member (pre-filter), a gas-permeable support member, the porous PTFE membrane, and a gas-permeable support member which are arranged in this order as viewed from the upstream side of gas flow) may be employed.

In general, an air filter medium is subjected to pleating by a commonly-known technique. The pleating is performed, for example, by using a reciprocating pleating machine to fold the air filter medium along mountain folds and valley folds arranged alternately in parallel on the surface of the medium so that the folded medium has W-shaped portions continuously arranged. Such an air filter medium subjected to pleating may be referred to as an air filter pack. The air filter pack may include a spacer placed to maintain the shape formed by the pleating. A string-shaped resin, called a bead, is often used as the spacer. The bead is so placed on the medium as to he in a direction perpendicular to the mountain (or valley) folds (in such a direction that the bead extends across the mountains and valleys). Preferably, two or more beads are so placed on the medium as to lie in the above direction with given intervals therebetween. The beads are preferably placed on both the front and back sides of the medium. The beads are typically formed by melting a resin such as a polyamide or polyolefin and applying the molten resin.

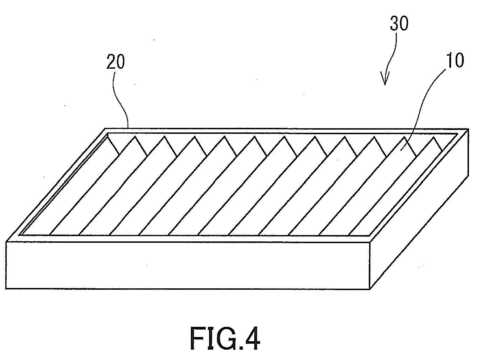

The air filter medium subjected to pleating (air filter pack) is assembled, as necessary, with a frame (supporting frame) to form an air filter unit in which the air filter pack has its edges supported by the frame. A member made of metal or resin is used as the frame according to the intended use of the air filter. When a frame made of resin is used, the frame may be formed by injection molding, simultaneously with which the medium may be fixed to the frame. FIG. 4 shows an example of the air filter unit. The air filter unit 30 includes an air filter medium 10 subjected to pleating and a frame 20 fixing the outer edges of the air filter medium 10.

EXAMPLES

Hereinafter, the present invention will be described in more detail by way of examples. It should be noted that the present invention is not limited to the examples presented below.

(Example 1)

A mixture was obtained by homogeneously mixing 100 parts by weight of a fine PTFE powder ("POLYFLON F-104", manufactured by DAIKIN INDUSTRIES, LTD. and having a SSG of 2.171) with 19 parts by weight of a liquid lubricant (Isopar). This mixture was then extruded into a sheet form using an extruder fitted with a fishtail die. The extruded PTFE sheet had a thickness of 1.5 mm and a width of 20 cm.

Subsequently, the PTFE sheet was rolled by passing it between a pair of metal pressure rolls. This rolling was performed with the PTFE sheet being pulled in its longitudinal direction by a roll placed downstream of the pressure rolls so that the dimension of the PTFE sheet in the width direction was maintained before and after the rolling. The rolled PTFE sheet had a thickness of 200 $\mu$m. The rolled PTFE sheet had a temperature of 5 to 10°C.

Next, the rolled PTFE sheet was heated to a temperature of 19°C or higher. To be specific, the rolled PTFE sheet was heated to a temperature of 50°C by allowing the sheet to move at a speed of 7 m/min through the inside of a device set at 100°C.

Subsequently, the PTFE sheet having a temperature of 40°C and containing the liquid lubricant was stretched in its width direction at a stretch ratio of 4 using a tenter. Afterwards, the stretched PTFE sheet was held at 150°C to remove the liquid lubricant.

Subsequently, the PTFE sheet, from which the liquid lubricant was removed, was stretched in its longitudinal direction by roll stretching at a stretching temperature of 280°C and a stretching ratio of 12, and then was further stretched in its width direction by tenter stretching at a stretching temperature of 110°C and a stretching ratio of 30. This yielded an unsintered porous PTFE membrane. The area stretch ratio in the stretching performed after the removal of the liquid lubricant was 360.

Finally, the unsintered porous PTFE membrane was sintered using a hot-air furnace at 400°C, yielding a long strip of porous PTFE membrane.

The porous PTFE membrane was sandwiched between two layers of core-sheath non-woven fabric (having a mass per unit area of 30 $g/m^2$, containing PET as the core component and PE as the sheath component, and having an apparent density of 0.158 $g/cm^2$, an embossed area ratio of 15%, and a thickness of 0.19 mm), and the sandwich assembly was subjected to heat lamination by passing it between a pair of rolls heated to 180°C. This yielded an air filter medium having a three-layer structure (a long, slender medium having a width of 780 mm and a length of 200 m).

Next, the air filter medium obtained was subjected to pleating (mountain height (pleat width) = 50 mm, number of mountains = 186). The air filter medium subjected to pleating was cut, and the cut air filter medium was joined at its edges to a metal frame by means of an adhesive. Thus, an air filter unit (having a size of 610 mm x 610 mm and a thickness of 65 mm) was obtained.

(Comparative Example 1)

A porous PTFE membrane was produced in the same manner as in Example 1, except that the rolled PTFE sheet was not heated to a temperature of 19°C or higher and that the rolled PTFE sheet having a temperature of 5 to 10°C was stretched in the width direction.

(Comparative Example 2)

Aporous PTFE membrane was produced in the same manner as in Comparative Example 1, except that the content of the liquid lubricant (Isopar) was 17 parts by weight.

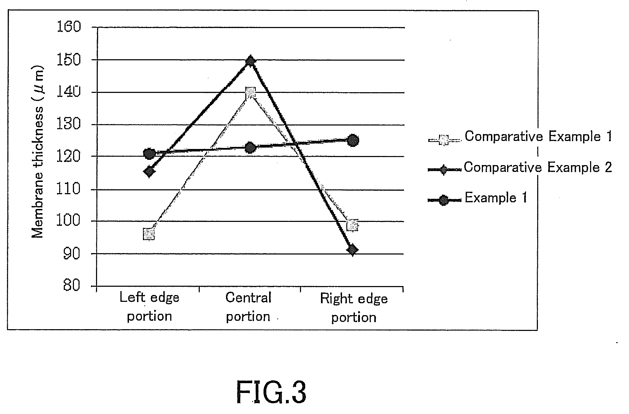

For each of the porous PTFE membranes of Example 1 and Comparative Examples 1 and 2, examination was made of the thickness of the porous PTFE membrane as obtained after the PTFE sheet from which the liquid lubricant was removed was stretched in the width direction. To be specific, the thickness of the porous PTFE membrane was measured, using a dial gauge having a scale interval of 0.001 mm and a gauge head outer diameter of 10 mm, at the left edge portion, central portion, and right edge portion of the porous PTFE membrane as viewed in its longitudinal direction. The results of the thickness measurement of the porous PTFE membranes of Example 1 and Comparative Examples 1 and 2 are shown in FIG. 3.

In Example 1, the porous PTFE membrane, as obtained after the PTFE sheet from which the liquid lubricant was removed was stretched in the width direction, had a thickness substantially uniform in the width direction, which means that unevenness of stretching did not occur. In each of Comparative Examples 1 and 2, the porous PTFE membrane, as obtained after the PTFE sheet from which the liquid lubricant was removed was stretched in the width direction, had a larger thickness at the central portion than at the left and right edge portions, which means that unevenness of stretching occurred.

INDUSTRIAL APPLICABILITY

A porous PTFE membrane produced according to the present invention is effectively used in a waterproof gas-permeable member, an air filter medium, or another product to improve the level of selective permeation.

**Claims**

1. A method for producing a porous polytetrafluoroethylene membrane, comprising:

   a step A of extruding a mixture containing a fine polytetrafluoroethylene powder and a liquid lubricant into a sheet form so as to obtain a polytetrafluoroethylene sheet;
   a step B of rolling the polytetrafluoroethylene sheet by passing the polytetrafluoroethylene sheet between a pair of rolls in a longitudinal direction of the sheet corresponding to a direction of the extrusion in the step A;
   a step C of heating the polytetrafluoroethylene sheet having a temperature lower than 19°C to a temperature of 19°C or higher;

a step D of stretching the rolled polytetrafluoroethylene sheet having a temperature of 19°C or higher in a width direction perpendicular to the longitudinal direction of the sheet;
a step E of removing the liquid lubricant from the polytetrafluoroethylene sheet stretched in the step D; and
a step F of stretching the polytetrafluoroethylene sheet, from which the liquid lubricant has been removed in the step E, in both the longitudinal direction and the width direction of the sheet, so as to obtain a porous polytetrafluoroethylene membrane.

2. The method for producing a porous polytetrafluoroethylene membrane according to claim 1, further comprising a step G of sintering the porous polytetrafluoroethylene membrane at a temperature equal to or higher than a melting point of polytetrafluoroethylene.

3. The method for producing a porous polytetrafluoroethylene membrane according to claim 1, wherein in the step B, the rolling of the polytetrafluoroethylene sheet is performed, with the polytetrafluoroethylene sheet maintaining a dimension in the width direction.

4. The method for producing a porous polytetrafluoroethylene membrane according to claim 1, wherein the fine polytetrafluoroethylene powder has a standard specific gravity of 2.19 or less.

5. The method for producing a porous polytetrafluoroethylene membrane according to claim 1, wherein a mixing ratio between the fine polytetrafluoroethylene powder and the liquid lubricant in the mixture is adjusted so that 5 to 50 parts by mass of the liquid lubricant is contained per 100 parts by mass of the fine polytetrafluoroethylene powder.

6. The method for producing a porous polytetrafluoroethylene membrane according to claim 1, wherein in the step A, a fishtail die is used to extrude the mixture into a sheet form so as to obtain the polytetrafluoroethylene sheet.

7. The method for producing a porous polytetrafluoroethylene membrane according to claim 1, wherein in the step E, a stretch ratio in the longitudinal direction multiplied by a stretch ratio in the width direction is 4 or more and 500 or less.

8. A method for producing a waterproof gas-permeable member, comprising a step of joining a fixing member to a joint region of a porous polytetrafluoroethylene membrane having a gas permeation region surrounded by the joint region,
the method further comprising performing the production method according to claim 1 as a step of preparing the porous polytetrafluoroethylene membrane.

9. A method for producing an air filter medium, comprising a step of joining a porous polytetrafluoroethylene membrane and a gas-permeable support member together,
the method further comprising performing the production method according to claim 1 as a step of preparing the porous polytetrafluoroethylene membrane.

FIG.1A

FIG.1B

FIG.2

FIG.3

FIG.4

**INTERNATIONAL SEARCH REPORT**

International application No.

PCT/JP2015/000019

A.   CLASSIFICATION OF SUBJECT MATTER
*B01D71/36*(2006.01)i, *B01D39/16*(2006.01)i, *B01D69/10*(2006.01)i, *C08J9/00*
(2006.01)i

According to International Patent Classification (IPC) or to both national classification and IPC

B.   FIELDS SEARCHED

Minimum documentation searched (classification system followed by classification symbols)
B01D71/36, B01D39/16, B01D69/10, C08J9/00

Documentation searched other than minimum documentation to the extent that such documents are included in the fields searched
Jitsuyo Shinan Koho          1922–1996   Jitsuyo Shinan Toroku Koho   1996–2015
Kokai Jitsuyo Shinan Koho    1971–2015   Toroku Jitsuyo Shinan Koho   1994–2015

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X | JP 2013-253214 A   (Nitto Denko Corp.), 19 December 2013 (19.12.2013), claims; examples & US 2014/0196840 A1   & WO 2013/005430 A1 & EP 2730607 A1           & CN 103649190 A | 1–9 |
| A | JP 49-37798 B1   (Sumitomo Electric Industries, Ltd.), 12 October 1974 (12.10.1974), column 6, lines 2 to 14; examples (Family: none) | 1–9 |
| A | JP 2012-192348 A   (Fujifilm Corp.), 11 October 2012 (11.10.2012), paragraphs [0052], [0057] (Family: none) | 1–9 |

☒   Further documents are listed in the continuation of Box C.          ☐   See patent family annex.

| | |
|---|---|
| *         Special categories of cited documents:<br>"A"   document defining the general state of the art which is not considered   to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>    06 April 2015 (06.04.15) | Date of mailing of the international search report<br>    14 April 2015 (14.04.15) |
|---|---|
| Name and mailing address of the ISA/<br>    Japan Patent Office<br>    3-4-3,Kasumigaseki,Chiyoda-ku,<br>    Tokyo 100-8915,Japan | Authorized officer<br><br><br>Telephone No. |

Form PCT/ISA/210 (second sheet) (July 2009)

**13**

**INTERNATIONAL SEARCH REPORT**

| International application No. |
|---|
| PCT/JP2015/000019 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2003-176374 A  (Nitto Denko Corp.), 24 June 2003 (24.06.2003), paragraphs [0037], [0051] (Family: none) | 1-9 |
| A | EP 1775100 A1  (Singtex Industrial Co., Ltd.), 18 April 2007 (18.04.2007), claims; paragraphs [0019], [0022] (Family: none) | 1-9 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2013253214 A